# EUROPÄISCHE PATENTSCHRIFT

(11) **EP 4 680 586 B1**
(45) Veröffentlichungstag und Bekanntmachung des Hinweises auf die Patenterteilung: **13.05.2026**
(21) Anmeldenummer: 24709456.8
(22) Anmeldetag: 11.03.2024
(51) Int. Cl.: C04B 20/02

(54) **FARBOPTIMIERUNG BEI DER MECHANO-CHEMISCHEN AKTIVIERUNG VON TONEN**
OPTIMIZATION OF COLOR IN THE MECHANOCHEMICAL ACTIVATION OF CLAYS
OPTIMISATION DE LA COULEUR DANS L'ACTIVATION MÉCANOCHIMIQUE DES ARGILES

(30) Priorität: 13.03.2023 DE 102023106222; 13.03.2023 LU 503623
(43) Veröffentlichungstag der Anmeldung: 21.01.2026
(73) Patentinhaber: thyssenkrupp Polysius GmbH, 59269 Beckum (DE); thyssenkrupp AG, 45143 Essen (DE); SCHWENK Zement GmbH & Co. KG, 89077 Ulm (DE); Celitement GmbH & Co. KG, 76344 Eggenstein-Leopoldshafen (DE)
(72) Erfinder: WILCZEK, Michael, 48231 Warendorf (DE); MAIER, Oliver, 48167 Münster (DE); LAMPE, Karl, 59320 Ennigerloh (DE); SACHSE, Carsten, 48147 Münster (DE); STROTMANN, Jan, 48653 Coesfeld (DE); WILLMS, Eike, 44309 Dortmund (DE); RUDOWSKI, Luc, 13100 Aix en Provence (FR); MÖLLER, Hendrik, 89604 Allmendingen (DE); HAMM, Andreas, 89275 Elchingen (DE); HINDER, Daniel, 76344 Eggenstein-Leopoldshafen (DE); FYLAK, Marc, 90530 Wendelstein (DE); NEUMANN, Thomas, 97753 Karlstadt (DE)
(74) Vertreter: Tetzner, Michael
(86) Internationale Anmeldenummer: PCT/EP2024/056410
(87) Internationale Veröffentlichungsnummer: WO 2024/188960

(56) Entgegenhaltungen:
- WO-A1-97/01614
- CN-A- 109 954 485
- CN-A- 111 362 602
- CZ-B6- 307 528
- JP-A- H0 867 803
- RU-C2- 2 209 824
- SIMON BLOTEVOGEL: "Ability of the R3 test to evaluate differences in early age reactivity of 16 industrial ground granulated blast furnace slags (GGBS)", CEMENT AND CONCRETE RESEARCH., vol. 130, 1 April 2020 (2020-04-01), US, pages 105998, XP93161349, ISSN: 0008-8846, Retrieved from the Internet <URL:https://www.sciencedirect.com/science/article/pii/S0008884619311421/pdfft?md5=d44e758bb1164f2d480c3a3ede769488&pid=1-s2.0-S0008884619311421-main.pdf> [retrieved on 20240513], DOI: 10.1016/j.cemconres.2020.105998

## Beschreibung

Die Erfindung betrifft ein Verfahren zur Farboptimierung bei der mechano-chemischen Aktivierung von Tonen.

Insbesondere im Bereich der Zementindustrie haben sich aktivierte Tone als Zusatzstoff etabliert. Der derzeit übliche Weg ist die Trocknung und Calcinierung der Tone, also eine thermische Aktivierung. Hierbei wird zum einen Energie für die Erwärmung benötigt, zum anderen kann eine zu hohe Temperatur auch weitere Stoffveränderungen bewirken, die gegebenenfalls unerwünscht sind.

Durch die Brennbedingungen bei der thermischen Aktivierung in oxidierender Atmosphäre wandeln sich in den Tonen natürlich vorliegende Eisenverbindungen insbesondere in rote Eisenoxide um. Dies bedingt eine rötliche Färbung der so aktivierten Tone, was die Marktakzeptanz damit hergestellter Zemente signifikant verringert. Der Eisengehalt, beziehungsweise der Gehalt an Eisen in seiner stark färbenden dreiwertigen Oxidationsstufe (Fe³⁺), bestimmt maßgeblich die Farbe eines kalzinierten Tones. Die Farbe bildet einen wichtigen Qualitätsparameter für eine mögliche Verwendung dieser aktivierten Tone als Bestandteil des üblicherweise grauen Zementes. Insbesondere minderwertigere ("magere") Tone können Fe₂O₃-Gehalte von durchschnittlich 2 bis 9 Gew.-% aufweisen. In den sogenannten "red clays" kann der Fe₂O₃-Gahlt auch bis zu 15 bis 20 % betragen. Diese hohen Eisengehalte können beim Kalzinieren zu einer sehr intensiven und meist unerwünschten Rotverfärbung des so hergestellten künstlichen Puzzolans und den damit hergestellten Kompositzementen führen, während eisenarme Tone zu einer rosafarbenen Färbung führen. Aus diesem Grunde werden im Kalzinations- oder Nachkalzinationsbereich von Anlagen zur Herstellung kalzinierter Tone beispielsweise Brennbedingungen mit reduzierenden Gasatmosphären eingestellt, um insbesondere die Umwandlung von Fe₂O₃ in Mineralen mit roter Färbung, zum Beispiel Hämatit, in schwarzen Magnetit Fe₃O₄ zu erreichen . Zur Einstellung reduzierender Brennbedingungen wiederum sind gut ausbrennbare fossile und teure und CO₂-intensive Primärbrennstoffe wie Erdgas, Erdöl, Braunkohle oder Steinkohle erforderlich. Die Herstellung reduzierender Brennbedingungen zur Farbänderung steht damit verfahrenstechnisch eigentlich im Gegensatz zu Brennbedingungen für einen optimalen Brennstoffumsatz. Insbesondere sogenannte Sekundärbrennstoffe erfordern für eine effektive Feuerung durchgehend oxidierende Brennbedingungen, was wiederum eine aufwändige Nachbehandlung der dreiwertigen Eisenspezies erfordert, um die unerwünschte Rotfärbung im thermisch aktivierten Ton zu eliminieren beziehungsweise zu mindern.

Aus der WO 2017 / 008 863 A1 ist ein Verfahren und eine Anlagenanordnung zum Aufbereiten und Aktivieren eines Rohstoffes bekannt.

Aus der EP 3 909 682 A1 ist ein Verfahren und eine Wälzmühle zum thermomechanischen Aktivieren eines Tongemisches bekannt.

Aus der DE 10 2015 106 109 A1 ist ein Verfahren zur tribochemischen Aktivierung von Bindemitteln und Zusatzstoffen bekannt.

Ein allgemeiner Überblick zum Stand der Technik kann beispielsweise aus den folgenden wissenschaftlichen Publikationen gewonnen werden:
Bolm, Carsten; Hernändez, José G. (2018): Mechanochemistry of Gaseous Reactants (Angew. Chem. Int. Ed, 58). Online verfügbar unter http://dx.doi.org/10.1002/anie.201810902.
Fernändez, Rodrigo; Martirena, Fernando; Scrivener, Karen L. (2011): The origin of the pozzolanic activity of calcined clay minerals: A comparison between kaolinite, illite and montmorillonite. In: Cement and Concrete Research 2011 (41), S. 113-122. DOI: 10.1016/j.cemconres.2010.09.013.
Ilić, Biljana; Radonjanin, Vlastimir; Malešev, Mirjana; Zdujić, Miodrag; Mitrović, Aleksandra (2016): Effects of mechanical and thermal activation on pozzolanic activity of kaolin containing mica. In: Applied Clay Science 2016 (123), S. 173-181. DOI: 10.1016/j.clay.2016.01.029.
Tole, Ilda; Habermehl-Cwirzen, Karin; Cwirzen, Andrzej (2019): Mechanochemical activation of natural clay minerals: an alternative to produce sustainable cementitious binders - review. In: Miner Petrol 2019 (113), S. 449-462. DOI: 10.1007/s00710-019-00666-y.
Tole, Ilda; Habermehl-Cwirzen, Karin; Rajczakowska, Magdalena; Cwirzen, Andrzej (2018): Activation of a Raw Clay by Mechanochemical Process-Effects of Various Parameters on the Process Efficiency and Cementitious Properties. In: Materials (Basel, Switzerland) 2018 (11). DOI: 10.3390/ma11101860

Aus der DE 10 2017 114 831 A1 ist ein Verfahren zur Aufarbeitung von Flugasche und ein Verfahren zur Herstellung von Zement bekannt.

Aus der CN 109 954 485 A ist ein Herstellungsverfahren für aktivierte Tone bekannt.

Aus der CZ 307 528 B6 ist ein Verfahren zur Behandlung von Kaolin, Ton oder einer Mischung hieraus bekannt.

Aus der JP H08 67803 A ist ein Epoxyharz und dessen Herstellung bekannt.

Aus der CN 111 362 602 A ist ein Verfahren zum Ändern der Farbe von tonhaltigem Zementierungsmaterial bekannt.

Aus der WO 97/01614 A1 ist die Tonaktivierung mit Metallsalzen bekannt.

Aus der RU 2 209 824 C2 ist ein Verfahren zur Herstellung von Schlammpulvern bekannt.

Aus der SIMON BLOTEVOGEL: "Ability of the R3 test to evaluate differences in early age reactivity of 16_ industrial ground granulated blast furnace slags (GGBS)", CEMENT AND CONCRETE RESEARCH. , Bd. 130, 1. April. 2020 (2020-04-01), Seite 105998, XP93161349, US ISSN: 0008-8846, DOI: 10.1016/j.cemconres.2020.105998 Gefunden im Internet: URL:https://www.sciencedirect.com/science/ article/pii/S0008884619311421/pdfft?md5=d44e758bb1164f2d480c3a3ede769488&pid =1-s2.0-S0008884619311421-rnain.pdf> [gefunden am 2024-05-13] ist der R3 test bekannt.

Aus der TOLE ILDA ET AL: "Mechanochemical activation of natural clay minerals: an alternative to produce sustainable cementitious binders - review", MINERALOGY AND PETROLOGY, SPRINGER VIENNA, VIENNA, Bd. 113, Nr. 4, 8. Mai 2019 (2019-05-08), Seiten 449-462, XP036833323, ISSN: 0930-0708, DOI: 10.1007/S00710-019-00666-Y [gefunden am 2019-05-08] ist die mechanochemische Aktivierung von Tonen bekannt.

Da es sich bei Tonen um ein komplexes System handelt (insbesondere im Vergleich zum Brennen von Kalkstein), führen unterschiedliche Aktivierungsverfahren zu unterschiedlichen Produkten (aktivierten Tonen) mit unterschiedlichen Eigenschaften. Ebenso führt die Unterschiedlichkeit der verwendbaren Tone dazu, dass nicht jedes Verfahren für jeden Ton verwendbar ist.

Aufgabe der Erfindung ist es, eine Farboptimierung in einfacher Weise zu ermöglichen und damit insbesondere auch die Verwendung sonst nicht verwendbarer stark eisenhaltiger Tone zu ermöglichen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur mechano-chemischen Aktivierung und gleichzeitigen Farboptimierung von mineralischem Material. Es ist geht also darum, zum einen das mineralische Material mechano-chemisch in einer ersten Hochenergiemühle zu aktivieren und eben nicht in einem thermischen Prozess. Zum anderen geht es darum, gleichzeitig mit der Aktivierung auch eine Farboptimierung zu erreichen, und diese eben nicht, wie bei einer thermischen Aktivierung üblich, erst in einem nachgelagerten Schritt durchzuführen. Wesentlich ist somit die gleichzeitige Aktivierung und Farboptimierung in einem einzigen Mahlvorgang und damit in nur einem einzigen Maschinenaggregat. Die mechano-chemische Aktivierung und gleichzeitig die Farboptimierung erfolgen in einer ersten Hochenergiemühle. Hierzu wird das mineralische Material mit einem festen Reduktionsmittel gemeinsam in der ersten Hochenergiemühle vermahlen.

Die mechano-chemische Aktivierung besteht aus drei Phasen beziehungsweise Stadien: Im ersten Stadium sinkt die Partikelgröße (mehr oder weniger linear) zum Energieeintrag. Vereinfacht ausgedrückt, je mehr man mahlt, um so feiner wird das Produkt (RittingerZone). Hierfür gibt es jedoch eine Grenze, eine Partikelgröße, die kaum mehr zu unterschreiten ist. Ab diesem Punkt kommt man in eine zweite Stufe, wo die Partikelgröße sich mit weiterem Energieeintrag nicht ändert (Aggregations-Zone). In diesem Stadium kommt es zur Zerstörung von kristallographischen Strukturen durch Lösen von Atombindungen, einzelne Atome oder ganze Gruppen von Atomen werden durch andere Atome oder Gruppen anderer Atome ersetzt. Insbesondere auf den Partikeloberflächen wird die anfängliche Kristallstruktur, sowie Bindungstyp und Oxidationsstufen von Atomen, aufgrund hoher Energieübertragung und nachfolgende chemische Reaktionen, verändert. Aus wirtschaftlichen Gründen vermeidet man daher, bei einer normalen Mahlung, wo nur die Schaffung von Oberfläche erzielt werden soll, den Übergang von der ersten Stufe zur zweiten Stufe. Für die mechano-chemische Aktivierung ist dieser Schritt aber notwendig. Erhöht man die Energiezufuhr noch weiter, so kann man zu einer dritten Stufe kommen, wo sogar aufgrund der Agglomeration von Nanopartikeln wieder ein Ansteigen der Partikelgröße feststellbar ist (Agglomerations-Zone), was sich positiv auf die Verarbeitbarkeit in Mörteln und Betonen von Zementen auf Basis aktivierter Tone auswirkt. Diesen Bereich wird man bei einer normalen Vermahlung daher noch viel mehr vermeiden, da mit weniger Aufwand ein besseres Ergebnis in Bezug auf die Partikelgrößenverteilung zu erzielen ist.

Es hat sich jedoch herausgestellt, dass es bei hohen Energieeinträgen, also in der zweiten Stufe, zu Veränderungen des Materials selbst kommt, die beispielsweise bei Tonen, ebenso wie eine thermische Aktivierung, zu einer Aktivierung, also zu einer Reaktivität die die Verwendung des Materials als Bindemittelbestandteil (und damit als Klinkerersatz) ermöglicht,. Daher kann bei derart hohen Energieeinträgen auf eine anschließende thermische Behandlung verzichtet werden.

Hierbei hat sich jedoch herausgestellt, dass der Energiebedarf für eine reine mechano-chemische Aktivierung höher sein kann als der für eine thermische Aktivierung. Daher erscheint das erfindungsgemäße Verfahren zunächst einmal nachteilig gegenüber der konventionellen thermischen Aktivierung. Es hat sich jedoch gezeigt, dass das erfindungsgemäße Verfahren trotz des vergleichsweise wahrscheinlich hohen Energiebedarfs, insbesondere für die Aktivierung von Tonen, vorteilhaft ist. Gerade bei komplexen Ausgangsstoffen, wie zum Beispiel Tonen, kommt es bei einer thermischen Aktivierung regelmäßig zu mehreren negativen Effekten. Zum einen ist bekannt, dass beispielsweise aus Tonen bei erhöhter Temperatur Stoffe gasförmig austreten können, die eine aufwändigere Abgasreinigung, insbesondere bei einer künftig ggf. benötigen zusätzlichen CO₂-Abscheidung (Carbon Capture). Durch den Verzicht auf höhere Temperaturen kann dieses vermieden werden. Zum anderen werden bei erhöhter Temperatur der Aktivierung oftmals farbgebende Komponenten, beispielsweise Eisenverbindungen aufoxidiert, was im Falle von Eisen zu einer ungewünschten Rotfärbung des Produkts führt. Vielmehr wird es durch die gleichzeitige Vermahlung mit einem festen Reduktionsmittel sogar möglich, bereits stark gefärbte, also insbesondere Fe₂O₃-haltige Materialien, zum Beispiel als "red clays" bezeichnete Tone, als Ausgangsmaterial zu verwenden und diese zu einem farbneutralen Produkt zu verarbeiten. Somit wird zwar für das erfindungsgemäße Verfahren für den eigentlichen Aktivierungsschritt der Energiebedarf erhöht, aber es vereinfacht sich die Abgasbehandlung und ein eigener Verfahrensschritt mit anschließende Reduzierung kann vermieden werden. Der gesamte Vorgang der Aktivierung zur Herstellung eines marktfähigen Bindemittels kann so effizient vereinfacht werden. Des Weiteren weisen unterschiedliche Tonminerale unterschiedliche optimale Aktivierungstemperaturen auf. So werden beispielsweise Minerale der Kaolin- und der Chloritgruppe bei deutlich niedrigeren Temperaturen aktiviert als z.B. Minerale der Glimmergruppe (Muskovit, Illit u.a.). Wählt man bei Tonen, die Minerale dieser Gruppen enthalten, für die thermische Aktivierung die optimale Aktivierungstemperatur von Kaolinit, so werden Minerale wie Muskovit und Illit noch nicht aktiviert. Wählt man hingegen für die thermische Aktvierung die deutlich höhere Aktivierungstemperatur von Muskovit und Illit, so kommt es aufgrund der Bildung neuer Mineralphasen, insbesondere Spinelle, zum Überbrennen des Kaolinit, was eine Deaktivierung zur Folge hat. Diese Differenzierung der Tonminerale bezüglich der optimalen Aktivierungstemperatur entfällt hingegen bei der mechano-chemischen Aktivierung.

Farbgebende Komponenten, beispielsweise Eisenverbindungen, werden bei höheren Aktivierungstemperaturen häufig oxidiert, was im Falle von Eisen zu einer Steigerung der unerwünschten Rotfärbung im Produkt führt. Anders als bei der thermischen Aktivierung von Ton, bei der die Tonminerale dehydroxyliert werden und das entstehende Wasser vollständig entweicht, kann bei dem erfindungsgemäßen mechano-chemischen Verfahren nachgewiesen werden, dass das Wasser beziehungsweise Hydroxylgruppen der Tonminerale im Mineralgefüge erhalten bleiben und für eine Reaktion zum Beispiel mit einem festen Metall wie Aluminiumpulver oder Zinkpulver verfügbar gemacht werden. Der bei dieser Umsetzung entstehende Wasserstoff ermöglicht die Umsetzung von Fe₂O₃ in Fe₃O₄ in den Tonmineralen insbesondere gemäß den folgenden chemischen Reaktionen:

2 Al + 3 H₂O --> Al₂O₃ + 3 H₂

9 Fe₂O₃ + 3 H₂ --> 6 Fe₃O₄ + 3 H₂O

Gesamt: 2 Al + 9 Fe₂O₃ --> Al₂O₃ + 6 Fe₃O₄

Wie anhand der Reaktionsgleichungen zu sehen ist, handelt es sich dabei um eine autokatalytisch verlaufende Reaktion. Das heißt das für den ersten Reaktionsschritt notwendige Wasser wird insgesamt nicht verbraucht.
- Erfindungsgemäß ist das Farboptimierungsverfahren besonders effizient, da die Kinetik der chemischen Reduktionsreaktion von Fe₂0₃ zu Fe₃0₄ verbessert wird durchdie Verfügbarkeit der für die Reduktionsreaktion erforderlichen Wassermoleküle oder Hydroxylgruppen in den Tonmineralen. Dieser Effekt beruht auf dem hohen Energieniveau bei der mechano-chemischen Aktivierung und der daraus resultierenden Oberflächenchemie. Nach einer thermischen Aktivierung sind für solche Umsetzungen erforderliche Wasser- oder Hydroxylgruppen hingegen nicht vorhanden.den hohen Mischeffekt des Materials bei der mechano-chemischen Aktivierung aufgrund der hohen Drehzahl des Rührers in der ersten Hochenergiemühle.

Erfindungsgemäß bewirkt das mechano-chemische Aktivieren des mineralischen Materials eine Erhöhung des für die Beurteilung der Reaktivität, beziehungsweise der Puzzolanität, bestimmten R3-Wertes (7d) nach ASTM C1897-20 um wenigstens 150 J/g, bevorzugt um wenigstens 250 J/g verglichen mit dem Ausgangsmaterial. Die Aktivierung ist somit entsprechend hoch, um die so aktivierten Materialien als Zementersatzstoffe (Supplementary Cementitious Materials, SCM) zu verwenden. Bei dem Standard ASTM C1897-20 handelt es sich um einen in der Zementindustrie gebräuchlichen Standard zur Untersuchung der Reaktivität von Zementzumahlstoffen beziehungswiese zur Charakterisierung des Abbindeverhaltens.

In einer weiteren Ausführungsform der Erfindung wird das Mahlen und mechano-chemische Aktivieren mit einem Energieeintrag pro Mahlraumvolumen von wenigstens 100 kW / m³, bevorzugt von wenigstens 200 kW / m³, durchgeführt. Ein üblicher Wert für eine Kugelmühle als Beispiel einer Feinstmühle liegt üblicherweise eher bei 20 kW / m³ und somit deutlich niedriger (und energetisch günstiger). Hierbei ist als das Mahlraumvolumen das im Inneren der ersten Hochenergiemühle zur Verfügung stehende Volumen zu verstehen, also das freie Volumen, wenn kein Material und beispielsweise auch keine Kugeln in der ersten Hochenergiemühle sind. Zur Mühle gehörende Bauteile, zum Beispiel eine Welle oder Rührwerkzeuge und dergleichen, die im Inneren beispielsweise beweglich angeordnet sind, zählt somit nicht zum Mahlraumvolumen, da dieses Volumen eben nicht durch Material einnehmbar ist.

In einer weiteren Ausführungsform der Erfindung wird nach dem Mahlen eine größenselektive Trennung in eine Grobfraktion und eine Feinfraktion durchgeführt. Die Feinfraktion wird zurück in die erste Hochenergiemühle überführt und die Grobfraktion wird als Produkt entnommen. Beispielsweise erfolgt die Trennung mittels eines Sichters. Hierbei wird die Feinfraktion zurückgeführt, da die Aktivierung mit einer Vergrößerung der Partikel verbunden ist. Dieses unterscheidet sich grundlegend von der normalen Trennung und Rückführung bei einer Mühle, bei der die Grobfraktion normalerweise zurückgeführt wird.

In einer weiteren Ausführungsform der Erfindung wird die zweite größenselektive Trennung derart durchgeführt, dass die Größengrenze zwischen der zweiten Grobfraktion und der zweiten Feinfraktion der mit der zweiten Hochenergiemühle erreichbaren geringsten Partikelgröße mal einem Faktor von 2 entspricht.

In einer weiteren Ausführungsform der Erfindung wird die erste Hochenergiemühle kontinuierlich betrieben. Dieses bedeutet, dass sowohl mineralisches Material kontinuierlich in die erste Hochenergiemühle eingetragen und gleichzeitig kontinuierlich aktiviertes mineralisches Material entnommen wird. Bevorzugt wird die erste Hochenergiemühle daher als Durchlaufmühle mit einer Eingangsseite und einer Ausgangsseite betrieben.

In einer weiteren Ausführungsform der Erfindung ist die erste Hochenergiemühle ausgewählt aus der Gruppe umfassend Schwingmühle, Planetenkugelmühle und Rührwerkskugelmühle. Bevorzugt ist die erste Hochenergiemühle ausgewählt aus der Gruppe umfassend Planetenkugelmühle und Rührwerkskugelmühle. Diese Mühlentypen haben sich für die mechano-chemische Aktivierung als besonders geeignet herausgestellt, da mit diesen Mühlentypen besonders hohe Energiedichten erzielbar sind. Besonders bevorzugt ist als erste Hochenergiemühle eine trocken betriebene Rührwerkskugelmühle.

In einer weiteren Ausführungsform der Erfindung wird eine Rührwerkskugelmühle mit einem Länge-zu-Durchmesser-Verhältnis von 2,5 bis 5 ausgewählt.

In einer weiteren Ausführungsform der Erfindung wird die erste Hochenergiemühle mit einem Mahlkörper-Füllungsgrad von 50 Vol.-% bis 95 Vol.-%, bevorzugt von 60 Vol.-% bis 70 Vol.-%, gefüllt. Hierbei wird das Schüttvolumen der Mahlkörper auf das Volumen der ersten Hochenergiemühle bezogen. Da bei einer einfachen Schüttung der Füllgrad um 64 % und bei einer dichtesten Kugelpackung um 74 % liegt, ergibt sich selbst bei einem theoretischen Mahlkörper-Füllungsgrad von 100 % ein entsprechender Freiraum, welcher beispielsweise von dem zu aktivierenden mineralischen Material eingenommen werden kann. Da der Füllgrad einer Mahlkörperschüttung aber sehr extrem von der Form und Gleichförmigkeit der Mahlkörper abhängt, ist es praktisch einfacher hier den Mahlkörper-Füllungsgrad eben auf das Schüttvolumen und nicht auf das eigentliche (gefüllte) Volumen zu beziehen.

In einer weiteren Ausführungsform der Erfindung werden Mahlkörper aus Eisen oder einer Eisenlegierung oder aus Aluminium oder einer Aluminiumlegierung ausgewählt. Bevorzugt werden Mahlkörper aus Eisen oder einer Eisenlegierung ausgewählt. Insbesondere werden Mahlkörper aus Stahl ausgewählt.

In einer weiteren Ausführungsform der Erfindung werden keramische Mahlkörper ausgewählt.

In einer weiteren Ausführungsform der Erfindung werden Mahlkörper mit einem Durchmesser von 1 mm bis 10 mm ausgewählt.

In einer weiteren Ausführungsform der Erfindung wird die Rührwerkskugelmühle mit einer Umfangsgeschwindigkeit von 2 m/s bis 6 m/s, bevorzugt von 3 m/s bis 5 m/s, besonders bevorzugt von 3,5 m/s bis 4,5 m/s, betrieben.

In einer weiteren Ausführungsform der Erfindung wird die Rührwerkskugelmühle mit einem Gasvolumenstrom und einem Materialstrom betrieben. Das Verhältnis von Gasvolumenstrom zu Materialstrom wird derart eingestellt, dass das Verhältnis von Gasvolumenstrom zu Materialstrom zwischen 0,0001 m³/kg und 5 m³/kg, vorzugsweise zwischen 0,1 m³/kg und 2 m³/kg liegt.

In einer weiteren Ausführungsform der Erfindung wird das mineralische Material vor dem Einbringen in die erste Hochenergiemühle getrocknet und auf eine Restfeuchte kleiner 1 Gew.-% und einer Korngröße kleiner 2 mm zerkleinert.

In einer weiteren Ausführungsform der Erfindung wird das mineralische Material ausgewählt aus der Gruppe umfassend Ton, Asche, insbesondere Flugasche, Belitzementklinker, Altbetonfeinanteile, Schlacke, Schichtsilikate und Gerüstsilikate. Besonders bevorzugt wird als mineralisches Material Ton oder eine Mischung aus Ton und einem weitere Material oder mehreren weiteren Materialien ausgewählt aus der Gruppe umfassend Asche, insbesondere Flugasche, Belitzementklinker, Altbetonfeinanteile, Schlacke, Schichtsilikate und Gerüstsilikate sowie Kalkstein.

In einer weiteren Ausführungsform der Erfindung wird das mineralische Material zusammen mit 0,1-50 Gew.-% Quarz oder Korund mechano-chemisch aktiviert.

In einer weiteren Ausführungsform der Erfindung wird das Material nach dem Aktivieren und Farboptimieren zur Ermittlung der Aktivierung untersucht. Zur Untersuchung wird oder werden ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie, Thermogravimetrie, Rasterelektronenmikroskopie, Partikelgrößen- und/oder Partikelformanalyse, NMR-Spektroskopie, Farbmessung. Besonders bevorzugt wird zur Untersuchung ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie und Farbmessung.

In einer weiteren Ausführungsform der Erfindung wird als Gas für den Gasstrom durch die erste Hochenergiemühle ein Gas ausgewählt und verwendet, welches ein Gas oder mehrere Gase aufweist ausgewählt aus der Gruppe umfassend Stickstoff, Argon, Kohlendioxid, Wasserdampf, Kohlenmonoxid, Wasserstoff, Kohlenwasserstoff, insbesondere Methan, Ethan, Propan und Butan. Besonders bevorzugt weist das Gas hauptsächlich (mehr als 50 Vol.-%) Stickstoff, Kohlendioxid oder Wasserdampf auf. Besonders bevorzugt weist das Gas weniger als 1 Vol.-%, bevorzugt weniger als 0,1 Vol.-%, Sauerstoff auf.

In einer weiteren Ausführungsform der Erfindung wird als Reduktionsmittel ein Metall mit einer Elektronegativität von kleiner 1,8, bevorzugt kleiner 1,7, ausgewählt. Hierdurch kann die zuverlässige Reduktion des dreiwertigen Eisens gewährleistet werden.

In einer weiteren Ausführungsform der Erfindung wird als Reduktionsmittel ein Metall mit einem niedrigeren (stärker negativen) Normalpotential als dem von Eisen ausgewählt.

In einer weiteren Ausführungsform der Erfindung wird als Reduktionsmittel ein Metall ausgewählt aus der Gruppe umfassend Aluminium, Zink, Magnesium und Calcium. Diese Metalle haben sich aus verschiedenen Gründen als geeignet erweisen. Zum einen sind diese Elemente in dem fertigen Produkt Zement nicht schädlich, sondern zumeist ohnehin vorhanden. Zum anderen sind diese, beispielsweise Aluminium, einfach und kostengünstig verfügbar. Des Weiteren eigen sich gerade diese Metalle besonders gut für das erfindungsgemäße Verfahren.

In einer weiteren Ausführungsform der Erfindung werden 0,01 bis 1 mol Reduktionsmittel pro kg zugeführte Menge an mineralischem Material zugegeben.

In einer weiteren Ausführungsform der Erfindung wird die Menge des Reduktionsmittels derart gewählt, sodass die durch die Oxidation des Metalls abgegebenen Elektronen dem 0,03-fachen bis 0,33-fachen der in dem mineralischen Material enthaltenen Stoffmenge an Fe³⁺ entspricht. Theoretisch wäre es ausreichend, ein Drittel aller Eisenatome zu zweiwertigem Eisen umzusetzen unter Bildung von Magnetit. Es hat sich jedoch gezeigt, dass bereits 10 % eine Entfärbung ergibt, die zu einem akzeptablen Produkt führt. Somit ist in diesem Bereich eine Produktoptimierung (von akzeptabel bis optimal) gegen die Kosten (je weniger, desto günstiger) abhängig vom adressierten Markt möglich.

In einer weiteren Ausführungsform der Erfindung wird das Reduktionsmittel mit einer Partikelgröße von kleiner als 100 µm zugegeben. Bevorzugt wird das Reduktionsmittel mit einer Partikelgröße von mehr als 0,1 µm zugegeben.

In einer weiteren Ausführungsform der Erfindung wird das Reduktionsmittel durch Abrieb von Mahlkörpern zugeführt. Hierzu werden bevorzugt Mahlkörper aus Aluminium eingesetzt. Dieses ist bevorzugt, wenn die benötigte Menge an Reduktionsmittel klein ist, also insbesondere bei eisenarmen Tonen.

In einer weiteren Ausführungsform der Erfindung wird das Reduktionsmittel ausgewählt aus der Gruppe umfassend Zinn(II)sulfat (ZnSO₄), Antimontrioxid (Sb₂O₃), Eisen(II)sulfat (FeSO₄), Eisen(II)sulfat Monohydrat (FeSO₄ · H₂O), Eisen(II)sulfat Heptahydrat (FeSO₄ · 7 H₂O). Besonders bevorzugt wird das Reduktionsmittel ausgewählt aus der Gruppe umfassend Zinn(II)sulfat (ZnSO₄), Antimontrioxid (Sb₂O₃).

In einer weiteren Ausführungsform der Erfindung wird als Reduktionsmittel elementarer Kohlenstoff ausgewählt aus der Gruppe umfassend Kohle, Graphit, Anthrazit, Ruß oder Petrolkoks in Gegenwart von Kohlendioxid.

In einer weiteren Ausführungsform der Erfindung wird als Reduktionsmittel elementarer Kohlenstoff ausgewählt aus der Gruppe umfassend Kohle, Graphit, Anthrazit, Ruß oder Petrolkoks in Gegenwart von Karbonaten aus der Gruppe umfassend Dolomit, Magnesit, Calcit, Aragonit, Eisencarbonat oder Alkalicarbonate.

In einer weiteren Ausführungsform der Erfindung umfasst das Verfahren einen Regelungskreis, wobei die zugegebene Menge des Reduktionsmittels geregelt wird. Es wird also aktiv die zugegebene Menge an Reduktionsmittels geregelt. Von dem mit dem Verfahren hergestellten aktivierten Material wird der Lab-Farbwert (auch CIELAB oder L*a*b*) ermittelt. Beim Lab-Farbwert steht der Helligkeitswert L* senkrecht auf der Farbebene (a*,b*) und ist über die EN ISO 11664-4 "Colorimetry -- Part 4: CIE 1976 L*a*b* Colour space" genormt. Die zugeführte Menge des Reduktionsmittels wird erhöht, sofern der a*-Wert 3 übersteigt, und reduziert, sofern der a*-Wert 1 unterschreitet. Dadurch wird das Produkt auf die Marktakzeptanz optimiert und der Verbrauch an Reduktionsmittel minimiert. Durch die aktive Regelung ist eben eine optimale Anpassung auch an die üblicherweise schwankende Zusammensetzung zum Beispiel von natürlichen Tonen möglich.

In einer weiteren Ausführungsform der Erfindung umfasst das Verfahren einen Regelungskreis, wobei die zugegebene Menge des Reduktionsmittels geregelt wird. Es wird also aktiv die zugegebene Menge an Reduktionsmittel geregelt. Von dem mit dem Verfahren hergestellten aktivierten Material wird der Lab-Farbwert (auch CIELAB oder L*a*b*) ermittelt. Beim Lab-Farbwert steht der Helligkeitswert L* senkrecht auf der Farbebene (a*,b*) und ist über die EN ISO 11664-4 "Colorimetry -- Part 4: CIE 1976 L*a*b* Colour space" genormt. Die zugeführte Menge des Reduktionsmittels wird erhöht, sofern der Farbindex ermittelt als Wurzel aus der Summe von (a*)² und (b*)2 größer als 5, bevorzugt größer als 10, ist. Entsprechend wird die zugeführte Menge des Reduktionsmittels erniedrigt, sofern der Farbindex ermittelt als Wurzel aus der Summe von (a*)² und (b*)2 kleiner als 10, bevorzugt kleiner als 5, ist.

In einer weiteren Ausführungsform der Erfindung wird vor der mechano-chemischen Aktivierung eine partielle thermische Aktivierung durchgeführt. Bevorzugt wird die thermische Aktivierung bei einer Temperatur von weniger als 600 °C, besonders bevorzugt weniger als 500 °C durchgeführt. Bei einer rein thermischen Aktivierung sind Temperaturen von beispielsweise 900 °C üblich. Somit kann zum einen Energie und so wenigstens teilweise der Energiebedarf für die mechano-chemische Aktivierung eingespart werden. Zum anderen hat aber auch die Reduktion der Höchsttemperatur weitere positive Auswirkungen, so wird beispielsweise die thermische Bildung von Stickoxiden reduziert oder ungewollte Produktveränderungen, beispielsweise Farbveränderungen durch Aufoxidation farbgebender Bestandteile, vermieden.

Nachfolgend ist das erfindungsgemäße Verfahren anhand eines in den Zeichnungen dargestellten Ausführungsbeispiels näher erläutert.

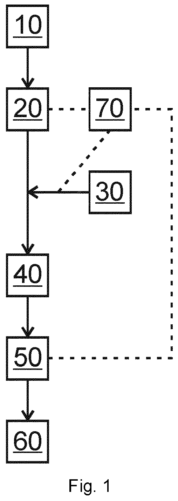

### Fig. 1 Ablaufdiagramm

In Fig. 1 ist das Verfahren stark schematisiert dargestellt. Aus einem Tonlager 10 wird Ton als mineralisches Material zur Aktivierung und Farboptimierung entnommen. Dieses wird an einem Sensor zur chemischen Analyse 20 vorbeigeführt, um den Gehalt an Fe³⁺ zu bestimmen. Der ermittelte Fe³⁺-Gehalt wird an eine Steuereinheit 70 übermittelt. Die Steuereinheit 70 regelt die Dosierung von Aluminium aus einem Aluminiumlager 30 zum Ton. Das Ton-Aluminium-Gemisch wird in eine erste Hochenergiemühle 40 überführt, dort gemahlen und dabei sowohl aktiviert als auch verfahrensintern, das heißt gleichzeitig farboptimiert. Das aus der ersten Hochenergiemühle 40 kommende Material wird in einer Farbanalyse 50 untersucht, der L*a*b*-Farbwert ermittelt und an die Steuereinheit 70 übermittelt. Das fertige Produkt wird in ein Produktlager 60 überführt.

Alternativ kann anstelle der chemischen Analyse 20 auch eine weitere Farbanalyse entsprechend der Farbanalyse 50 verwendet werden. Hierdurch kann das Verfahren deutlich vereinfacht werden. Damit wird eben der Farbwert des Tons verwendet und daraus aus Erfahrung dem Farbwert ein Fe³⁺-Gehalt zugeordnet. Damit kann das Verfahren ansonsten unverändert durchgeführt werden.

### Bezugszeichen

- 10: Tonlager
- 20: Chemische Analyse
- 30: Aluminiumlager
- 40: erste Hochenergiemühle
- 50: Farbanalyse
- 60: Produktlager
- 70: Steuereinheit

## Patentansprüche

1. Verfahren zur mechano-chemischen Aktivierung und gleichzeitigen Farboptimierung von mineralischem Material, **dadurch gekennzeichnet, dass** die mechano-chemische Aktivierung und gleichzeitig die Farboptimierung in einer ersten Hochenergiemühle (40) erfolgen, wobei das mineralische Material mit einem festen Reduktionsmittel gemeinsam in der ersten Hochenergiemühle (40) vermahlen wird, wobei das mechano-chemische Aktivieren des mineralischen Materials eine Erhöhung des R3-Wertes (7d) nach ASTM C1897-20 um wenigstens 150 J/g, bevorzugt um wenigstens 250 J/g, bewirkt.

2. Verfahren nach Anspruch 1, **dadurch gekennzeichnet, dass** als Reduktionsmittel ein Metall mit einer Elektronegativität von kleiner 1,8 ausgewählt wird.

3. Verfahren nach einem der vorstehenden Ansprüche, **dadurch gekennzeichnet, dass** als Reduktionsmittel ein Metall mit einem niedrigeren (stärker negativen) Normalpotential als dem von Eisen ausgewählt wird.

4. Verfahren nach einem der vorstehenden Ansprüche, **dadurch gekennzeichnet, dass** als Reduktionsmittel ein Metall ausgewählt wird aus der Gruppe umfassend Aluminium, Zink, Magnesium und Calcium.

5. Verfahren nach einem der vorstehenden Ansprüche, **dadurch gekennzeichnet, dass** 0,01 bis 1 mol Reduktionsmittel pro kg zugeführte Menge an mineralischem Material zugegeben werden.

6. Verfahren nach einem der vorstehenden Ansprüche, **dadurch gekennzeichnet, dass** die Menge des Reduktionsmittels derart gewählt wird, sodass die durch die Oxidation des Metalls abgegebenen Elektronen dem 0,03-fachen bis 0,33-fachen der in dem mineralischen Material enthaltenen Stoffmenge an Fe³⁺ entspricht.

7. Verfahren nach einem der vorstehenden Ansprüche, **dadurch gekennzeichnet, dass** das Reduktionsmittel mit einer Partikelgröße von kleiner als 100 µm zugegeben wird.

8. Verfahren nach einem der Ansprüche 1 bis 6, **dadurch gekennzeichnet, dass** das Reduktionsmittel durch Abrieb von Mahlkörpern zugeführt wird.

9. Verfahren nach Anspruch 1, **dadurch gekennzeichnet, dass** das Reduktionsmittel ausgewählt wird aus der Gruppe umfassend Zinn(II)sulfat (ZnSO₄), Antimontrioxid (Sb₂O₃), Eisen(II)sulfat (FeSO₄), Eisen(II)sulfat Monohydrat (FeSO₄ · H₂O), und Eisen(II)sulfat Heptahydrat (FeSO₄ · 7 H₂O).

10. Verfahren nach Anspruch 1, **dadurch gekennzeichnet, dass** als Reduktionsmittel elementarer Kohlenstoff ausgewählt wird aus der Gruppe umfassend Kohle, Graphit, Anthrazit, Ruß oder Petrolkoks in Gegenwart von Kohlendioxid.

11. Verfahren nach Anspruch 1, **dadurch gekennzeichnet, dass** als Reduktionsmittel elementarer Kohlenstoff ausgewählt wird aus der Gruppe umfassend Kohle, Graphit, Anthrazit, Ruß oder Petrolkoks in Gegenwart von Karbonaten aus der Gruppe umfassend Dolomit, Magnesit, Calcit, Aragonit, Eisencarbonat oder Alkalicarbonate.

12. Verfahren nach einem der vorstehenden Ansprüche, **dadurch gekennzeichnet, dass** das Verfahren einen Regelungskreis umfasst, wobei die zugegebene Menge des Reduktionsmittels geregelt wird, wobei von dem mit dem Verfahren hergestellten aktivierten Material z.B. der L*a*b*-Farbwert ermittelt wird, wobei die zugeführte Menge des Reduktionsmittels erhöht wird, sofern der a*-Wert 2 übersteigt und wobei die zugeführte Menge des Reduktionsmittels reduziert wird, sofern der a*-Wert 1 unterschreitet.

13. Verfahren nach einem der vorstehenden Ansprüche, **dadurch gekennzeichnet, dass** vor der mechano-chemischen Aktivierung eine partielle thermische Aktivierung durchgeführt wird.

## Claims

1. A method for the mechanochemical activation and simultaneous color optimization of mineral material, **characterized in that** the mechanochemical activation and simultaneous color optimization take place in a first high-energy mill (40), wherein the mineral material is ground together with a solid reducing agent in the first high-energy mill (40) and wherein the mechanochemical activation of the mineral material causes an increase in the R3 value (7d) according to ASTM C1897-20 by at least 150 J/g, preferably by at least 250 J/g.

2. The method according to claim 1, **characterized in that** a metal with an electronegativity of less than 1.8 is selected as the reducing agent.

3. The method according to one of the preceding claims, **characterized in that** a metal with a lower (more negative) normal potential than that of iron is selected as the reducing agent.

4. The method according to one of the preceding claims, **characterized in that** a metal from the group comprising aluminum, zinc, magnesium, and calcium is selected as the reducing agent.

5. The method according to one of the preceding claims, **characterized in that** 0.01 to 1 mol of reducing agent is added per kg of mineral material added.

6. The method according to one of the preceding claims, **characterized in that** the amount of reducing agent is selected such that the electrons released by the oxidation of the metal correspond to 0.03 to 0.33 times the amount of Fe³⁺ contained in the mineral material.

7. The method according to one of the preceding claims, **characterized in that** the reducing agent is added with a particle size of less than 100 µm.

8. The method according to one of claims 1 to 6, **characterized in that** the reducing agent is added through abrasion of grinding media.

9. The method according to claim 1, **characterized in that** the reducing agent is selected from the group comprising tin(II) sulfate (ZnSO₄), antimony trioxide (Sb₂O₃), iron(II) sulfate (FeSO₄₎ , iron(II) sulfate monohydrate (FeSO₄ · H₂O), and iron(II) sulfate heptahydrate (FeSO₄ · 7 H₂O).

10. The method according to claim 1, **characterized in that** elemental carbon from the group comprising coal, graphite, anthracite, carbon black, or petroleum coke in the presence of carbon dioxide is selected as the reducing agent elemental.

11. The method according to claim 1, **characterized in that** elemental carbon from the group comprising coal, graphite, anthracite, carbon black, or petroleum coke in the presence of carbonates from the group comprising dolomite, magnesite, calcite, aragonite, iron carbonate, or alkali carbonates is selected as the reducing agent.

12. The method according to one of the preceding claims, **characterized in that** the method comprises a control circuit, wherein the amount of reducing agent added is controlled, wherein, for example, the L*a*b* color value is determined from the activated material that is produced with the method, wherein the amount of reducing agent added is increased if the a* value exceeds 2 and wherein the amount of reducing agent added is reduced if the a* value falls below 1.

13. Process according to one of the preceding claims, **characterized in that** a partial thermal activation is carried out before the mechanochemical activation.

## Revendications

1. Procédé servant à l'activation mécanochimique et, simultanément, à l'optimisation de la couleur d'un matériau minéral, **caractérisé en ce que** l'activation mécanochimique et, simultanément, l'optimisation de la couleur se produisent dans un premier broyeur à haute énergie (40), où le matériau minéral est broyé en même temps avec un agent de réduction solide, dans le premier broyeur à haute énergie (40), où l'activation mécanochimique du matériau minéral provoque une augmentation de la valeur R3 (7d) selon la norme ASTM C1897-20 au moins de 150 J/g, de préférence au moins de 250 J/g.

2. Procédé selon la revendication 1, **caractérisé en ce qu'**un métal ayant une électronégativité inférieure à 1,8 est sélectionné comme agent de réduction.

3. Procédé selon l'une des revendications précédentes, **caractérisé en ce qu'**un métal ayant un potentiel normal plus faible (plus fortement négatif) que celui du fer est sélectionné comme agent de réduction.

4. Procédé selon l'une quelconque des revendications précédentes, **caractérisé en ce qu'**un métal est sélectionné comme agent de réduction parmi le groupe comprenant de l'aluminium, du zinc, du magnésium et du calcium.

5. Procédé selon l'une quelconque des revendications précédentes, **caractérisé en ce que** l'on ajoute au matériau minéral de 0,01 mol à 1 mol d'agent de réduction par kg de quantité fournie.

6. Procédé selon l'une quelconque des revendications précédentes, **caractérisé en ce que** la quantité d'agent de réduction est sélectionnée de manière telle, que les électrons libérés par l'oxydation du métal correspondent à une valeur comprise entre 0,03 fois et 0,33 fois la quantité de matière, à savoir du Fe³⁺, contenue dans le matériau minéral.

7. Procédé selon l'une quelconque des revendications précédentes, **caractérisé en ce que** l'agent de réduction est ajouté en ayant une taille de particules inférieure à 100 µm.

8. Procédé selon l'une quelconque des revendications 1 à 6, **caractérisé en ce que** l'agent de réduction est fourni par abrasion d'éléments broyeurs.

9. Procédé selon la revendication 1, **caractérisé en ce que** l'agent de réduction est sélectionné parmi le groupe comprenant du sulfate de zinc (ZnSO₄), du trioxyde d'antimoine (Sb₂O₃), du sulfate de fer (II) (FeSO₄), du sulfate de fer (II) monohydraté (FeSO₄ · H₂O) et du sulfate de fer (II) heptahydraté (FeSO₄ · 7 H₂O).

10. Procédé selon la revendication 1, **caractérisé en ce qu'**un carbone élémentaire est sélectionné comme agent de réduction parmi le groupe comprenant du charbon, du graphite, de l'anthracite, de la suie ou du coke de pétrole en présence de dioxyde de carbone.

11. Procédé selon la revendication 1, **caractérisé en ce qu'**un carbone élémentaire est sélectionné comme agent de réduction parmi le groupe comprenant du charbon, du graphite, de l'anthracite, de la suie ou du coke de pétrole en présence de carbonates, parmi le groupe comprenant de la dolomite, de la magnésite, de la calcite, de l'aragonite, du carbonate de fer ou des carbonates alcalins.

12. Procédé selon l'une quelconque des revendications précédentes, **caractérisé en ce que** le procédé comprend un circuit de commande, où la quantité ajoutée de l'agent de réduction est régulée, où, par exemple, la valeur de couleur L*a*b* est déterminée par le matériau activé et fabriqué avec le procédé, où la quantité d'agent de réduction, qui a été fournie, est augmentée, dans la mesure où la valeur de a* dépasse 2 et où la quantité d'agent de réduction, qui a été fournie, est réduite dans la mesure où la valeur de a* est inférieure à 1.

13. Procédé selon l'une quelconque des revendications précédentes, **caractérisé en ce qu'**une activation thermique partielle est effectuée avant l'activation mécanochimique.
